# EUROPEAN PATENT APPLICATION

(11) **EP 3 193 226 A1**
(43) Date of publication of application: **19.07.2017**
(21) Application number: 17151190.0
(22) Date of filing: 12.01.2017
(51) Int. Cl.: G05B 19/418

(54) **DEVICE AND METHOD FOR PLACING SPARE PARTS ON A BASE**

(30) Priority: 14.01.2016 BE 201605023
(71) Applicant: ROBOJOB, besloten vennootschap met beperkte aansprakelijkheid, 2220 Heist-op-den-Berg (BE)
(72) Inventor: DE ROOVERE, Helmut, 3140 Keerbergen (BE); DE CEUSTER, Luc Marcel, 2230 Herselt (BE)
(74) Representative: De Clercq, Krista

(57) **Abstract**

Device for placing spare parts (3) on a base (9), that can then be introduced in a machine tool (1) with the aid of a robot (4), characterised in that the device (6) is provided with means (7) to generate an image (8) on the base (9) that shows the locations (12) where the spare parts (3) must be placed, whereby the image (8) is communicated or passed on to the robot (4).

## Description

The present invention relates to a device for placing spare parts on a base.

More specifically, the invention is intended for manually placing spare parts, for example workpieces at well defined locations on a base, such as a workbench, supporting surface or bearing surface, so that these spare parts can then be placed in a machine tool with the aid of a robot.

The aforementioned machine tool can be a CNC machine for example or a computer controlled machine tool, such as a lathe, milling machine, grinding machine or similar.

The workpiece is placed in the machine tool with the robot and clamped in to be machined.

The robot will take a workpiece from a workbench on which various workpieces have been placed.

These workpieces are placed on the workbench manually, for example by the machine operator.

Hereby use is traditionally made of a 'positioning plate' that is placed on the workbench where a grid with openings cut out of a metal plate by laser, for example, that indicates the positions of the workpieces on the workbench for the operator and whereby these positions on the grid are passed on to the robot.

A disadvantage of such a positioning plate is that a specific plate is needed each time that is adapted for the workpieces concerned that must be machined in the machine tool at that time, for example a grid with large openings for large workpieces and a grid with small openings for small workpieces, in order to make optimum use of the area of the workbench.

A grid with large openings can of course be used for small workpieces, but in this case the area of the workbench cannot be utilised optimally with small workpieces.

Such a method is also prone to errors in the positioning and alignment of the workpieces on the workbench by the operator, who for example does not correctly align the workpieces in the openings of the grid.

It is also possible that the operator places a workpiece at a location of another workpiece, as in many cases the openings in the grid are identical so that it is not clear what workpiece must be placed at what location.

This means that the robot will grip the workpiece incorrectly or will grip next to it, such that the workpiece may possibly shift or fall over and thus can unintentionally move or knock over other workpieces on the workbench.

On account of the aforementioned reason for example the incorrect placing of workpieces means that the process reliability is jeopardised.

When the robot has gripped the workpiece incorrectly, it will also be placed in the machine incorrectly, such that the operations in the machine will not be performed correctly.

The purpose of the present invention is to provide a solution to at least one of the aforementioned and other disadvantages.

The subject of the present invention is a device for placing spare parts on a base, that can then be introduced in a machine tool with the aid of a robot, whereby the device is provided with means to generate an image on the base that shows the locations where the spare parts must be placed, whereby the image is communicated or passed on to the robot.

In other words, instead of the locations of the spare parts being shown in a physical way using a positioning plate or another mechanical device(s), the locations are shown in a virtual way using the generated image.

An advantage is that adapted positioning plates do not always have to be provided, but an adapted image can be generated each time that is adapted to the spare parts concerned that must be positioned. This results in a saving of time and material or raw materials.

Another advantage is that in this way the most efficient filling of the base with spare parts can be assured.

Preferably the image shows the locations where the spare parts must be placed by showing the outline or shape of the spare parts and/or by showing the identification data of the spare parts.

The aforementioned identification data can be dimensions, numbers or similar.

An advantage of this is that the indication of the locations of the spare parts by means of the outline or the shape contributes to the manual positioning of the spare parts on the base being coupled with fewer or no positioning errors compared to the application of a grid.

By showing the outline or the shape, not only will the location of the spare parts be clearly indicated, but also their precise orientation. This is important with non-cylindrical spare parts.

Due to the application of identification data, the correct spare parts can be coupled to the locations concerned on the base.

In a preferred embodiment, the aforementioned means for generating an image comprise a projector and/or laser projector.

Using such a projector a virtual image can be projected on the base, whereby the image shows the locations of the spare parts to be placed.

Such a projection is almost universally applicable to all possible bases, i.e. not only on a workbench.

Moreover a projector provides the possibility to project different images.

In a practical embodiment the image is adjustable or adaptable.

The image can be adjusted for example according to the number or type of workpieces that must be positioned, so that for any situation the most optimum distribution of the workpieces on the base can always be obtained.

The image can also be adjustable on the basis of input data for example that the machine operator enters on the basis of data originating from the machine itself, on the basis of a workpiece drawing or on the basis of a photograph.

The invention also concerns a method for placing spare parts on a base, which can then be introduced in a machine tool with the aid of a robot, whereby the method comprises the following steps:
- the generation of an image on the aforementioned base that shows the locations where the spare parts must be placed;
- the manual positioning of the workpieces on the base;
- placing a workpiece in the machine tool using the robot.

The advantages of the method according to the invention are analogous to the advantages of the device according to the invention described above.

Preferably, but not necessarily for the implementation of the method, use is made of such a device according to the invention.

Preferably, but not necessarily, the method comprises one or both of the following steps:
- the setting up or calculation of the image using a computer or similar;
- the passing on or communication of the image to the robot;
- the projection of the image on the base as a visual aid for an operator in order to be able to place the spare parts on the base at the right positions and in the right orientations.

By using the computer the most optimum image, i.e. the most optimum locations of the different spare parts on the base can be calculated so that the optimum positioning of the spare parts can always be realised.

By passing on this image to the robot, this will be at the height of the locations of the spare parts on the base, so that the robot knows precisely where it must pick up a spare parts to load it in the machine tool.

Preferably use is made of a projector or laser projector for generating the image.

With the intention of better showing the characteristics of the invention, a few preferred variants of a device according to the invention and a method thereby applied are described hereinafter by way of an example, without any limiting nature, with reference to the accompanying drawings, wherein:
figure 1 schematically shows a perspective view of a machine tool with robot that is provided with a device according to the invention;
figure 2 schematically shows the part indicated by F2 in figure 1;
figure 3 shows an alternative embodiment of figure 2;
figure 4 shows an alternative embodiment of figure 1.

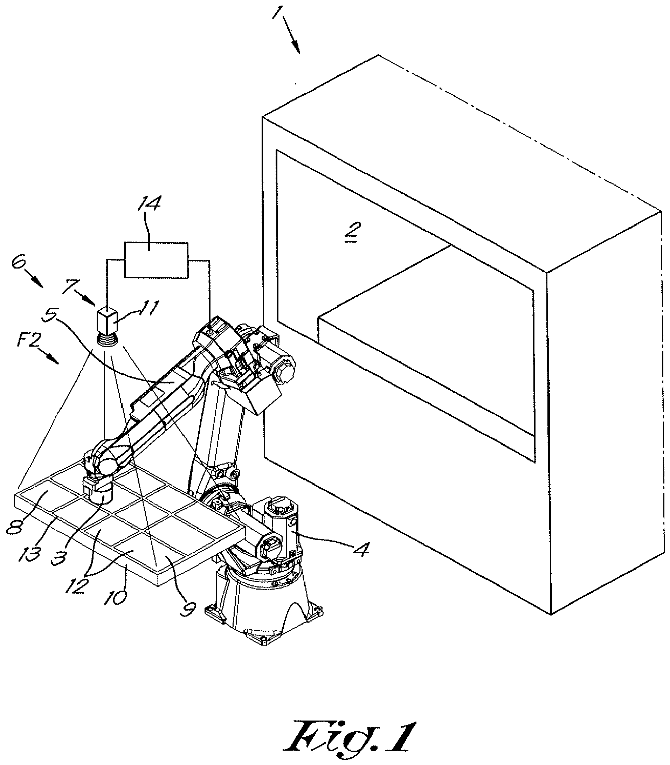

In this case, the machine tool 1 shown in figure 1 for example is a CNC lathe and essentially comprises a machining chamber 2 in which workpieces 3 are machined with tools. This machining chamber 2 is closable in this case.

Furthermore a robot 4 is provided that is provided with a robot arm 5.

With the aid of this robot arm 5, spare parts 3, i.e. workpieces 3 and/or tools, can be taken in and out of the chamber 2.

In this way successive workpieces 3 can be machined in the machine tool 1 with different tools.

Furthermore, a device 6 according to the invention is also provided.

In this case, this comprises means 7 for generating an image 8 on a base 9 on which the spare parts 3 can be placed.

As can be seen in figure 1, in this case the device 6 comprises a workbench 10 that forms the aforementioned base 9.

However, this is not necessarily the case, the base 9 can also be formed by the ground or the floor.

The aforementioned means 7 can be formed by a projector 11 for example that can project an image 8 on the workbench 10.

A special type of projector 11, a 'laser projector', will 'draw' or 'write' the image 8 on the workbench 10 as it were using a laser beam, whereby the laser beam will move so quickly over the workbench 10 that a (stationary) image can be observed by the human eye.

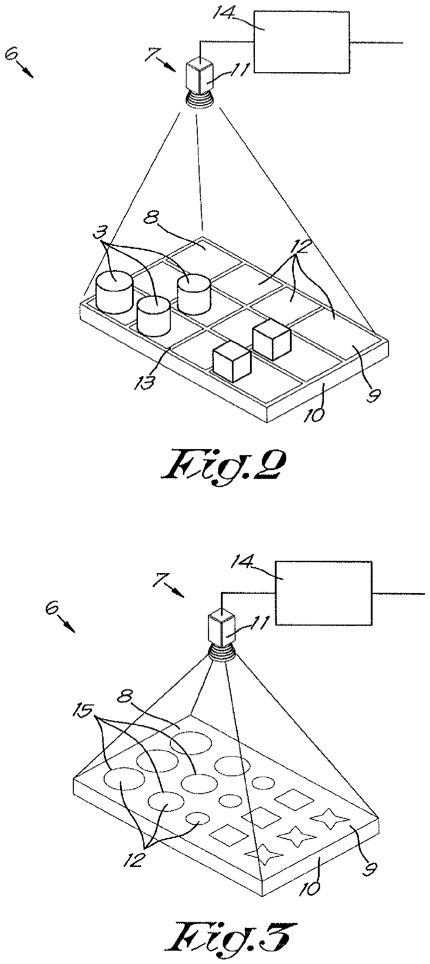

As can be seen in figures 1 and 2, the means 7 generate the image 8 on the workbench 10 by projection from above with respect to the workbench 10. It is of course also possible that the means 7 project the image 8 from the side or from underneath with respect to the workbench 10.

According to the invention, the aforementioned image 8 that is generated by the means 7 will show the locations 12 where the workpieces 3 must be placed.

In this case the image 8 shows the locations 12 where the spare parts 3 must be placed by showing a matrix 13 or similar with indications for the spare parts 3 to be placed. This is very similar to the grid, with openings cut out by laser, of the traditional positioning plate, with the difference that the image 8 is easier to adapt to different situations.

According to the invention this image 8 will also be passed on or communicated to the robot 4, so that the robot 4 'knows' where the spare parts 3 are placed and the robot 4 can correctly grasp the spare parts 3.

In this case, but not necessarily, the device 6 is provided with a computer 14 or similar that sets up or calculates the image 8.

The computer 14 will also be responsible for communicating or passing on the image 8 to the robot 4.

Preferably the image 8 can be set up or calculated on the basis of the data entered in the computer 14.

These data can be entered in the computer 14 by the machine tool 1 operator for example and can for example relate to the workpieces 3 that must be machined. On the basis of these data the computer 14 can calculate the image 8, i.e. calculate an image 8 that determines the best locations 12 for placing the workpieces 3 to be machined on the workbench 10.

The operation and use of the device 6 for placing spare parts 3 on a base 9 is very simple and as follows.

In a first step the image 8 is calculated or set up by the computer 14.

To this end the machine 1 operator can specify for example what workpieces 3 must be machined by the machine 1, on the basis of which the computer 14 calculates how these workpieces 3 can be placed on the workbench 10 in the optimum manner.

On the basis of this calculation, the computer 14 will determine a matrix 13 that shows the locations 12 of the workpieces 3. It is clear that this does not necessarily have to be a matrix 13.

Then the computer 14 sends an image 8 of this matrix 13 to the projector 11 and to the robot 4.

By means of the projector 11 this image 8 will be projected onto the workbench 10 as shown in figure 2.

The operator will then place the workpieces 3 on the workbench 10 manually, whereby he is helped by the matrix 13 that is shown on the workbench 10 and which shows the locations 12 of the workpieces 3 to be placed.

In this way the workpieces 3 are placed on the workbench 3 at the right location.

As the image 8 is also passed on to the robot 4, the robot 4 will know the location 12 of the workpieces 3 on the workbench 10, so that the robot 4 can take them from the workbench 10 without problems and can load them into the machine 1.

After a workpiece 3 has been machined in the machine 1, the robot 4 can load a subsequent workpiece 3 in the machine 1.

Figure 3 shows a variant according to figure 2, whereby in this case the image shows the locations 12 where the spare parts 3 must be placed by the showing the outline 15 or the shape of the spare parts 3.

Instead of a grid or matrix 13, the actual outline 15 or shape of the spare parts 3 is shown in the image 8, so that it is very simple for the operator to place the spare parts 3 at the correct location 12 by simply placing the spare parts 3 within the outline 15 concerned.

The operator no longer has to align the spare parts 3 with respect to a matrix 13, moreover the operator can clearly determine whether he is placing the right spare part 3 at the right location 12 by comparing the outline 15 shown with the outline of the spare part 3.

Additional identification data of the spare parts 3 can also be shown in the image. For example a number or code that is coupled to the spare part 3 concerned.

For the rest this embodiment is analogous to the embodiment of figure 2.

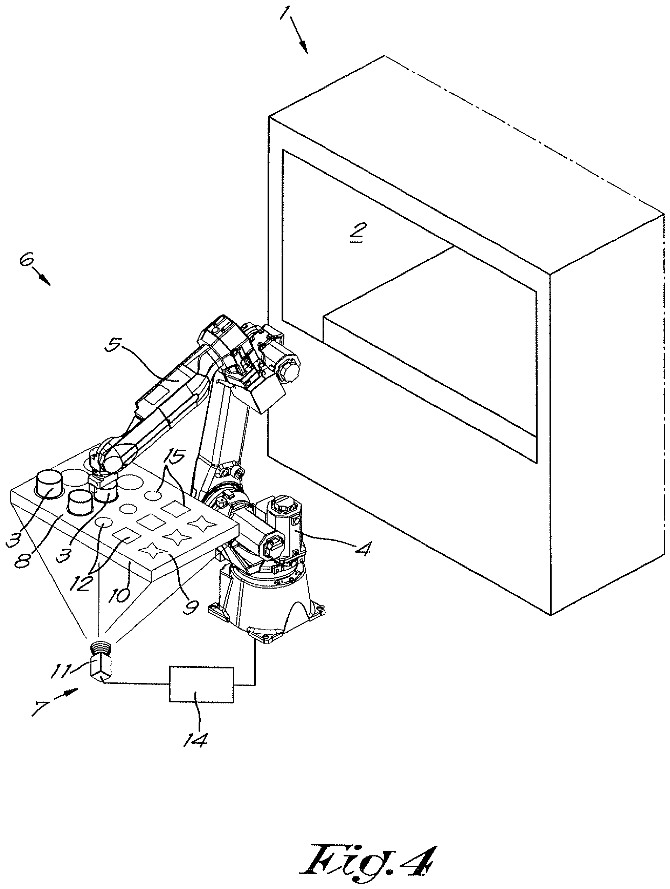

Figure 4 shows an alternative embodiment of figure 1, whereby in this case the projector 7 is under the workbench 10 and projects the image 8 onto the workbench 10 from underneath. In order to make the image 8 visible from above, the workbench 10 is translucent or transparent.

An advantage of this is that during the positioning of the workpieces 3 on the workbench 10 no shadow is created by the hand or arm of the operator for example.

In this example the image 8 will also show tolerances, margins or clearances of the locations 12 where the spare parts 3 must be placed. These tolerances correspond to the tolerances that are acceptable for the robot 4, i.e. the margins within which the spare part 3 may depart from the exact or ideal location 12, without this affecting the correct operation of the robot 4.

In practice this means that the image 8 shows an outline 15 of the spare part 3 to be placed, whereby this outline 15 is somewhat larger than the actual outline of the spare part 3. This somewhat larger outline 15 indicates to the operator within what margins the spare part 3 must be placed.

This has the advantage that the operator can be somewhat less accurate in the positioning of the spare parts 3 on the workbench 10 and can thus work faster, without there being a risk of the robot 4 incorrectly grasping the workpieces 3.

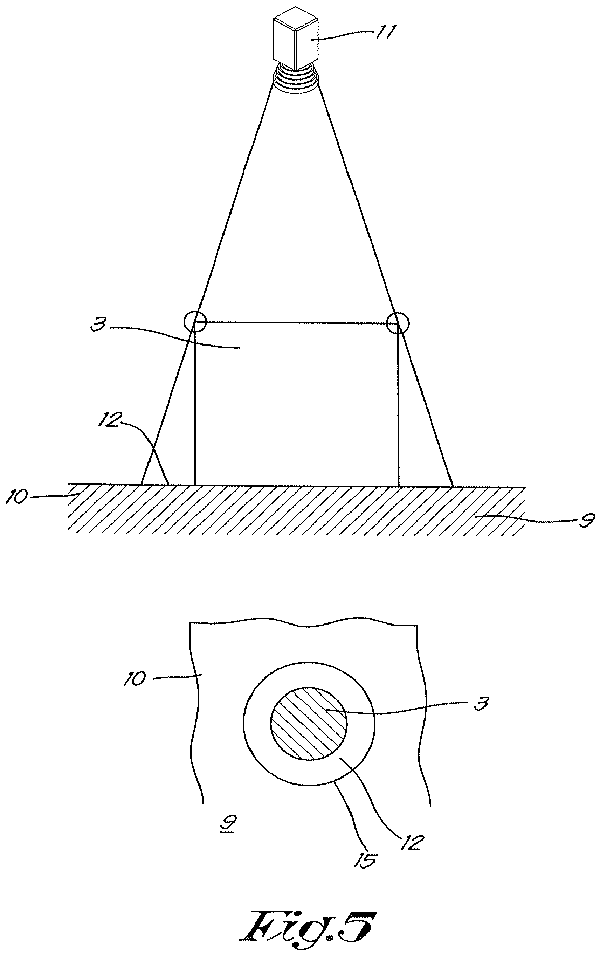

Figure 5 schematically shows the way in which the image 8 is projected, taking account of a certain tolerance or margin of the locations 12 of the spare parts 3.

In this example the tolerance is determined by the incident light from the projector 11 to the spare part 3, whereby the light that strikes next to the spare part 3 up to the base 9 will determine the projected shape, i.e. the somewhat larger outline 15 of the spare part 3 to be placed.

Although in the examples described above, there is always a case of workpieces 3, it is not excluded that the spare parts 3 concerned are tools.

Indeed, different tools are often needed to machine a workpiece 3 or different tools are needed depending on the type of workpiece 3 or the material of the workpiece 3 that is to be machined.

For example, a device 6 can also be used to place workpieces 3 and tools on a workbench 10 or to prepare workpieces 3 or tools respectively on two separate workbenches 10.

The robot 4 will then be able to pick up workpieces 3 and tools from the workbench (es) 10 and place them in the machine tool 1.

Although in the examples shown, the means 7 for generating an image 8 always comprise a projector 11, it is also possible that these aforementioned means 7 comprise a display whereby this display also acts as the base 9.

For example, such a display can be integrated in the workbench 10, whereby the workpieces 3 are placed on this display. Hereby preferably the display is protected by means of a scratch-free coating or another surface layer or covering.

The present invention is by no means limited to the embodiments described as an example and shown in the drawings, but such a device according to the invention and method thereby applied can be realised according to different variants without departing from the scope of the invention.

## Claims

1. Device for placing spare parts (3) on a base (9), that can then be introduced in a machine tool (1) with the aid of a robot (4), **characterised in that** the device (6) is provided with means (7) to generate an image (8) on the base (9) that shows the locations (12) where the spare parts (3) must be placed, whereby the image (8) is communicated or passed on to the robot (4).

2. Device according to claim 1, **characterised in that** the device (6) is provided with a workbench (10) that forms the aforementioned base (9).

3. Device according to claim 1 or 2, **characterised in that** the image (8) shows the locations (12) where the spare parts (3) must be placed by displaying a matrix (13) or similar with indications for the spare parts (3) to be placed.

4. Device according to any one of the previous claims, **characterised in that** the image (8) shows the locations (12) where the spare parts (3) must be placed by displaying the outline (15) or the shape of the spare parts (3) and/or by displaying the identification data of the spare parts (3).

5. Device according to any one of the previous claims, **characterised in that** the aforementioned means (7) for generating an image (8) comprise a projector (11) and/or laser projector.

6. Device according to any one of the previous claims, **characterised in that** the aforementioned means (7) for generating an image (8) comprise a display, whereby this display also acts as the base (9).

7. Device according to any one of the previous claims, **characterised in that** the aforementioned means (7) for generating an image (8), generate the image (8) on the base (9) by projection from the side and/or from above and/or from underneath with respect to the base (9).

8. Device according to any one of the previous claims, **characterised in that** the image (8) is adjustable or adaptable.

9. Device according to any one of the previous claims, **characterised in that** the device (6) is provided with a computer (14) or similar that sets up or calculates the image (8).

10. Device according to claim 9, **characterised in that** the image (8) is set up or calculated on the basis of data that are entered in the computer (14).

11. Device according to claim 9 or 10, **characterised in that** the computer (14) will communicate or pass on the image (8) to the robot (4).

12. Device according to any one of the previous claims, **characterised in that** the spare parts (3) comprise workpieces (3) and/or tools.

13. Device according to any one of the previous claims, **characterised in that** the image (8) shows tolerances, margins or clearances of the locations (12) where the spare parts (3) must be placed.

14. Method for placing spare parts (3) on a base (9), which can then be introduced in a machine tool (1) with the aid of a robot (4), **characterised in that** the method comprises the following steps:
- the generation of an image (8) on the aforementioned base (9) that shows the locations (12) where the spare parts (3) must be placed;
- the manual positioning of the workpieces (3) on the base;
- placing a workpiece (3) in the machine tool (1) using the robot (4).

15. Method according to claim 14, **characterised in that** the method comprises the additional step of setting up or calculating the image (8) with the aid of a computer (14) or similar.

16. Method according to claim 14 or 15, **characterised in that** the method comprises the additional step of passing on or communicating the image (8) to the robot (4).

17. Method according to any one of the previous claims 14 to 16, **characterised in that** for the generation of the image (8) use is made of a projector (11) or laser projector.

18. Method according to any one of the previous claims 14 to 17, **characterised in that** use is made of a device (6) according to any one of the previous claims 1 to 13.
